# EUROPEAN PATENT SPECIFICATION

(11) **EP 2 508 802 B1**
(45) Date of publication and mention of the grant of the patent: **26.06.2019**
(21) Application number: 11182651.7
(22) Date of filing: 25.09.2011
(51) Int. Cl.: F23R 3/00, F28F 3/02, F28F 3/04, F28F 13/12, F28D 21/00

(54) **Manufacturing method of cooling structure**
Herstellungsverfahren einer Kühlstruktur
Procédé de fabrication de structure de refroidissement

(30) Priority: 06.04.2011 JP 2011084562
(43) Date of publication of application: 10.10.2012
(73) Proprietor: Mitsubishi Heavy Industries Aero Engines, Ltd., Komaki-shi Aichi 455-0826 (JP)
(72) Inventor: Miyake, Yoshiaki, Tokyo (JP)
(74) Representative: Henkel, Breuer & Partner

(56) References cited:
- CA-A1- 2 731 373
- JP-A- 2000 320 837
- JP-A- 2005 061 333
- US-A- 6 122 917

## Description

### Technical Field

The present invention is related to a method of manufacturing the cooling structure.

### Background Techniques

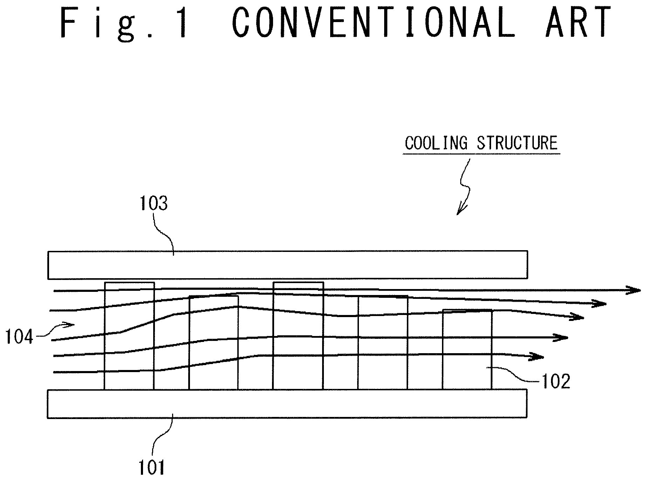

In a combustor provided for a gas turbine, a cooling structure is provided as a wall structure of a combustion chamber. FIG. 1 is a diagram showing an example of such a cooling structure. The cooling structure shown in FIG. 1 is provided with a cooling panel 101 and a shell 103. The cooling panel 101 is arranged to oppose to the shell 103. Between the cooling panel 101 and the shell 103, a passage 104 is formed so as to pass a cooling air therethrough. Also, a plurality of pin fins 102 are provided for the cooling panel 101. The plurality of pin fins 102 are arranged in the passage 104 and extend upwardly in a vertical direction from the cooling panel 101.

In the cooling structure shown in FIG. 1, the cooling panel 101 is cooled by the cooling air which flows through the passage 104. Here, because the plurality of pin fins 102 are provided, a turbulent flow is generated in the cooling air and a heat exchange between the cooling panel 101 and the cooling air is promoted. With this, the cooling efficiency can be improved.

In conjunction with the above, a heat exchange bulkhead is disclosed in US 2005/0047932 A1, and is provided with a plurality of protrusions extending upwardly in a vertical direction from a base member.

Also, in JP S62-271902A, a gas turbine blade and vane are disclosed, which has a cooling passage of an inner retention cooling system partitioned by a leading edge wall in a leading edge region of the blade and vane, a back wall, a side wall and an internal bulkhead. In the gas turbine blade and vane, there are arranged a plurality of columnar prominences of a one-end fixation type or a plurality of columnar bodies of a both-end fixation type. The columnar prominences and the columnar bodies are arranged on positions near to the internal bulkhead in the cooling passage rather than the leading edge wall to oppose to a cooling fluid. Also, the columnar prominences protrude from one end or both ends of the back wall and the side wall to the opposing plane, and the columnar bodies pass through the passage. Also, in JP S62-271902A, the columnar prominences and the columnar bodies are inclined to lead the flow of the cooling fluid to the leading edge wall.

CA 2731373A1 discloses a heat exchange bulkhead with a base plate spaced apart from a shell and a plurality of pin fins provided so as to extend between the base plate and the shell and so as to protrude upright from a surface of the base plate and entirely or partially inclined backward to a downstream side of a cooling medium flow. The document furthermore discusses the influence of the asperity on the heat transfer.

### Summary of the Invention

When the cooling structure is manufactured as shown in FIG. 1, there is a case that a variation of heights is caused in the plurality of pin fins 102. When the variation is caused, a space is produced between each of the plurality of pin fins 102 and the shell 103. When the space is produced, the cooling air is easy to flow through the passage 104 and is difficult to flow in the neighborhood of the cooling panel 101. As a result, the cooling efficiency is lowered. To prevent generation of the space, a high manufacture precision is required in case of manufacturing the plurality of pin fins 102, which is disadvantage from the point of a manufacturing cost.

Therefore, one subject matter of the present invention is to provide a method of manufacturing the cooling structure, in which a high cooling efficiency can be attained without increasing the manufacturing cost.

The method according to the present invention of manufacturing a cooling structure includes the features of claim 1.

The inventor of the present invention discovered that a heat transfer rate between a cooling medium and a cooling object reduces greatly as a clearance becomes larger, when a plurality of prominences extend upwardly in a vertical direction, and that the heat transfer rate does not reduce so much even if the clearance becomes larger, when the plurality of prominences are inclined and extend. The above-mentioned invention uses this point. That is, in the above-mentioned invention, a value of the maximum allowable clearance is set such that the heat transfer rate between the cooling medium and the first member becomes larger than the heat transfer rate when each of the prominences extends upward in the vertical direction from a first surface. Thus, if the maximum allowable clearance is set to have such a value, the heat transfer rate between the cooling medium and the first member can be maintained. That is, while maintaining the cooling efficiency, the manufacturing cost can be restrained.

The method according to the present invention of manufacturing a cooling structure thus includes: a first member as a cooling object having a first plane; and a second member arranged above the first plane to have a second plane to oppose to the first plane such that a passage is formed between the first plane and the second plane for a cooling medium to flow. The first member includes a plurality of prominences which extend upwardly from the first plane, and each of the plurality of prominences extends to be inclined along a direction in which the cooling medium flows. The manufacturing method includes: measuring as a first relation, a relation of a clearance formed between a tip of each of the plurality of prominences and the second plane and a heat transfer rate between the cooling medium and the first member, when each prominence is inclined along a direction in which the cooling medium flows; measuring as a second relation, a relation of a clearance and a heat transfer rate when each prominence extends upwardly in a vertical direction from the first plane; determining as the maximum allowable clearance, the clearance based on the first relation and the second relation such that the heat transfer rate when each prominence is inclined becomes larger than the heat transfer rate when each prominence extends upwardly in the vertical direction; and providing the second member on the first plane such that a clearance between each of the plurality of prominences and the second plane is equal to or less than the maximum allowable clearance.

According to the present invention, the method of manufacturing the cooling structure is provided to attain a high cooling efficiency without increasing the manufacturing cost.

### Brief Description of the Drawings

FIG. 1 is a diagram showing an example of a conventional cooling structure;
FIG. 2 is a diagram showing a combustor of a gas turbine according to a first example serving to explain features of the invention;
FIG. 3 is a perspective view showing a cooling panel;
FIG. 4 is a sectional view showing the cooling structure;
FIG. 5A is a graph showing an example of a relation between a rate of the clearance b and a heat transfer rate;
FIG. 5B is a diagram showing an example of a method of determining a maximum allowable clearance;
FIG. 6A is a diagram showing a simulation result of a flow of cooling air;
FIG. 6B is a diagram showing a simulation result of a flow of cooling air;
FIG. 6C is a diagram showing a simulation result of a flow of the cooling air;
FIG. 6D is a diagram showing a simulation result of a flow of cooling air;
FIG. 6E is a diagram showing a simulation result of a flow of a cooling air;
FIG. 7A is a schematic showing the cooling structure when a unevenness degree is 1;
FIG. 7B is the schematic showing the cooling structure when the unevenness degree is 2;
FIG. 8 is a flow chart showing a manufacturing method of the cooling structure; and
FIG. 9 is a schematic showing the cooling structure according to a second example serving to explain features of the invention.

### Description of Embodiments

Hereinafter, the present invention will be described with reference to the attached drawings.

### [First Example]

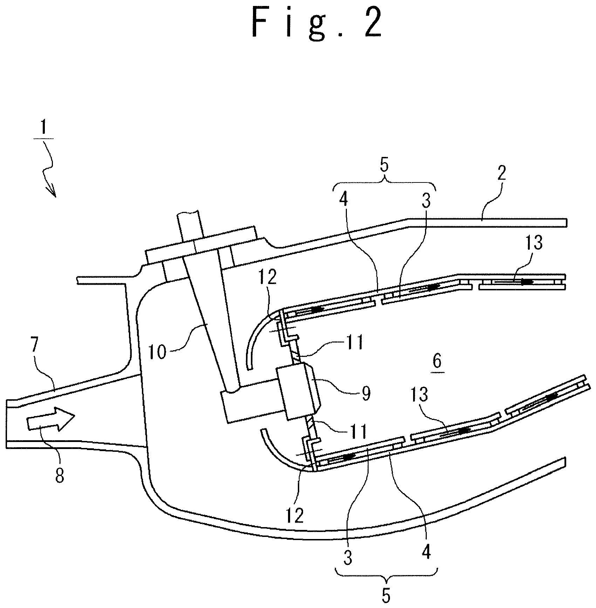

FIG. 2 is a diagram showing a gas turbine combustor 1 according to an example serving to explain features of the present invention. In the gas turbine combustor 1, compressed air is taken in from a compressor (not shown) and fuel is supplied into the compressed air for combustion. Thus, a combustion gas is generated, and is supplied to a turbine (not shown). Thus, the turbine is driven. For example, the gas turbine combustor 1 is used for a gas turbine for aircraft.

As shown in FIG. 2, the gas turbine combustor 1 is provided with a combustor case 2, a combustor liner 5 and a fuel supply mechanism 10.

An air inlet 7 is provided for the combustor case 2. The compressed air 8 is supplied from the compressor (not shown) into the inside of the combustor case 2 through the air inlet 7.

The combustor liner 5 is arranged inside the combustor case 2. An internal space of the combustor liner 5 forms a combustion chamber 6. An air inlet 11 is provided for the combustor liner 5 and the compressed air 8 is taken into the combustion chamber 6 through the air inlet 11. A downstream side portion of the combustion chamber 6 is connected with the entrance of a turbine (not shown).

The fuel supply mechanism 10 has a function to supply fuel into the combustion chamber 6. A fuel nozzle 9 is provided for a tip of the fuel supply mechanism 10. The fuel nozzle 9 is arranged to supply the fuel to the inside of the combustion chamber 6.

In the gas turbine combustor 1, the compressed air 8 is introduced into the combustor case 2 through the air inlet 7. The compressed air 8 is introduced into the combustion chamber 6 through the air inlet 11. The fuel is supplied to the combustion chamber 6 through the fuel nozzle 9. The fuel burns in the combustion chamber 6 and the combustion gas is generated. The generated combustion gas is supplied to the turbine and the turbine is driven.

Here, a shell 4 (a second member) is provided for a wall section of the combustor liner 5 as an outer wall, and a cooling panel 3 (a first member) is provided inside the shell 4. The cooling structure according to the present example is formed by the shell 4 and the cooling panel 3. A space (a passage) is formed between the shell 4 and the cooling panel 3. The space is connected with cooling air inlets 12 or cooling air holes (not shown) provided for the shell 4. The compressed air 8 which is taken into the combustor case 2 is supplied to the space as the cooling air 13 through the cooling air inlets 12 or the cooling air holes. In the space, a heat exchange is performed between the cooling air 13 (cooling medium) and the cooling panel 3 so that the cooling panel 3 is cooled.

Here, in the present example, the configuration of the cooling structure is devised. Below, the cooling structure will be described in detail.

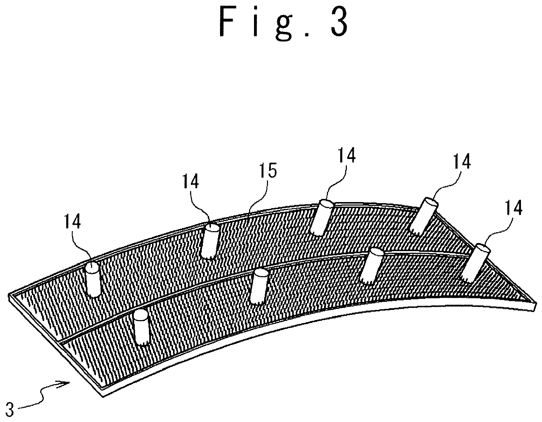

FIG. 3 is a perspective view showing the cooling panel 3. As shown in FIG. 3, the cooling panel 3 is tabular and a plurality of screwing sections 14 and a plurality of pin fins 15 (prominences) are provided for the upper surface (a first surface). The plurality of screwing sections 14 are provided to attach the cooling panel 3 to the shell 4 and to extend upwardly in a vertical direction from the first surface. Although not shown, an opening is provided for a position of the shell 4 corresponding to each of the plurality of screwing sections 14. Each of the plurality of screwing sections 14 is inserted in the opening provided for the shell 4, so that the cooling panel 3 is attached to the shell 4.

On the other hand, the plurality of pin fins 15 are provide to promote the heat exchange between the cooling air and the cooling panel 3.

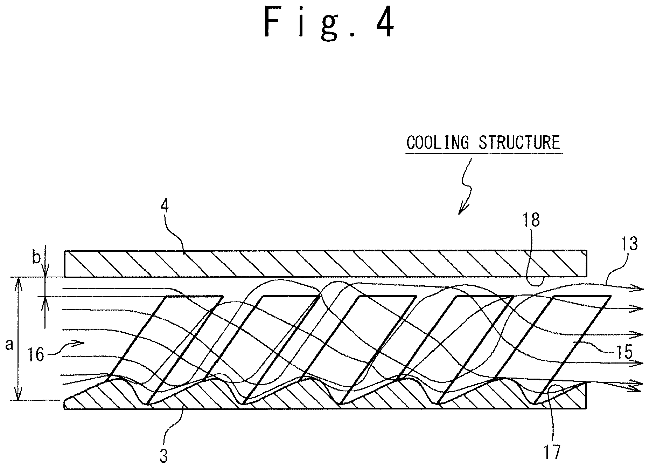

FIG. 4 is a sectional view showing the cooling structure. As previously mentioned, the cooling structure is provided with the cooling panel 3 and the shell 4. The cooling panel 3 is provided with a surface (the first surface 17). On the other hand, the shell 4 is provided with a lower surface (a second surface 18). The cooling panel 3 and the shell 4 are arranged for the first surface 17 and the second surface 18 to oppose to each other. The distance between the first surface 17 and the second surface 18 is a first distance a. Also, as previously mentioned, between the cooling panel 3 and the shell 4, the passage 16 is formed so as to pass the cooling air 13 therethrough. The cooling air 13 flows into a constant direction in the passage 16.

As shown in FIG. 4, the first surface 17 is formed have a wave shape when being viewed from the section of the cooling panel 3 along the flow direction of the cooling air 13. Also, the plurality of pin fins 15 are provided on the first surface 17 to extend upwardly to rise from the first surface 17. Each of plurality of pin fins 15 is inclined in the flow direction of the cooling air 13. A clearance b is provided between the vertex of each pin fin 15 and the second surface 18.

As mentioned above, because each pin fin 15 is inclined, the flow of cooling air 13 is turned to the side of the cooling panel 3 by each pin fin 15. Thus, the cooling air 13 is easy to flow through the neighborhood of the cooling panel 3, so that a heat exchange between the cooling air 13 and the cooling panel 3 is promoted to cool the cooling panel 3 effectively. It should be noted that it is desirable that an angle between a direction in which each pin fin 15 extends and the first surface 17 is not smaller than 30° and not larger than 60°.

In addition, because the first surface 17 has a wave shape, the flow of cooling air 13 is changed in the flow direction and hits the inclined slope of the first surface 17. As a result, the cooling panel 3 can be more effectively cooled.

Moreover, in the present example, a maximum allowable value (maximum allowable clearance) of the clearance b is set to an appropriate value. The heights of the plurality of pin fins 15 have a distribution due to the manufacture precision. Therefore, the clearances b which is formed between the vertex of each pin fin 15 and the second surface 18 has a distribution. In the present example, the maximum allowable clearance is set such that a heat transfer rate between the cooling air 13 and the cooling panel 3 when each pin fin 15 is inclined is larger than the heat transfer rate when each pin fin 15 extends straightly upwardly. This point will be described below.

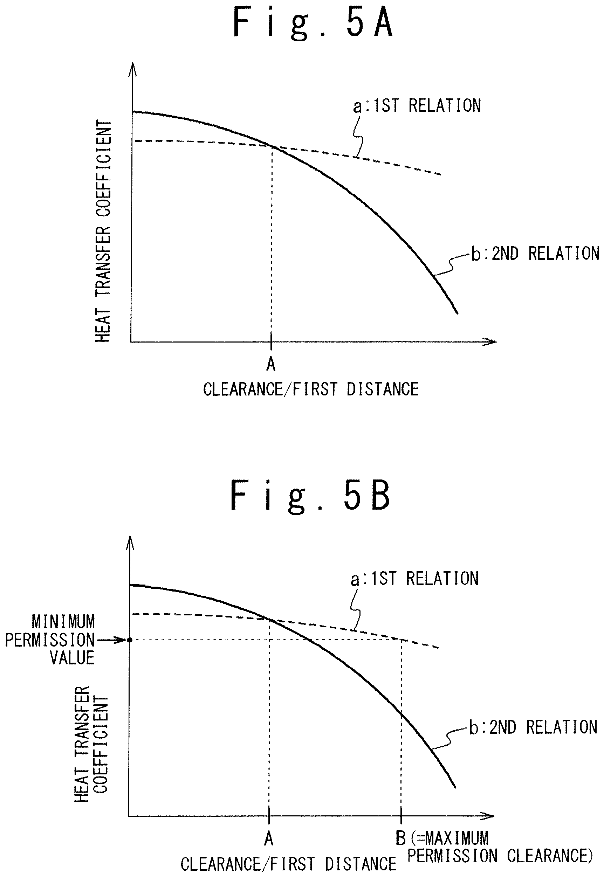

FIG. 5A is a graph showing an example of a relation of a rate (%) of the clearance b to first distance a and the heat transfer rate. The relation (a first relation a) when each pin fin 15 is inclined and the relation (a second relation b) when each pin fin 15 extends straightly upwardly are shown in FIG. 5A. As shown in FIG. 5A, when the clearance b is smaller, the heat transfer rate is larger in the case that each pin fin 15 extends straightly upwardly than in the case that each pin fin 15 is inclined. However, as shown by second relation b, when each pin fin 15 extends straightly upwardly, the heat transfer rate decreases more greatly as the clearance b becomes larger. On the other hand, as the shown by the first relation a, when each pin fin 15 is inclined, even if the clearance b became larger, the heat transfer rate decreases scarcely. In a region where the clearance b is larger than a value A, the heat transfer rate is higher in the case that each pin fin 15 is inclined than in the case that each pin fin 15 extends straightly upwardly. That is, in the present example, the clearance b is set to a value equal to or larger than the value A. It should be noted that, when the angle between the first surface 17 and each pin fin 15 is 45°, the value A is 5%.

When each pin fin 15 is inclined, pressure loss per one pin fin 15 reduces. Therefore, the pressure difference becomes small between the upstream side and the downstream side with respect to each pin fin 15. As a result, the flow rate of the cooling air 13 which flows through the clearance b reduces. Thus, it could be considered that the heat transfer rate reduces scarcely even if the clearance b is large to some extent in size.

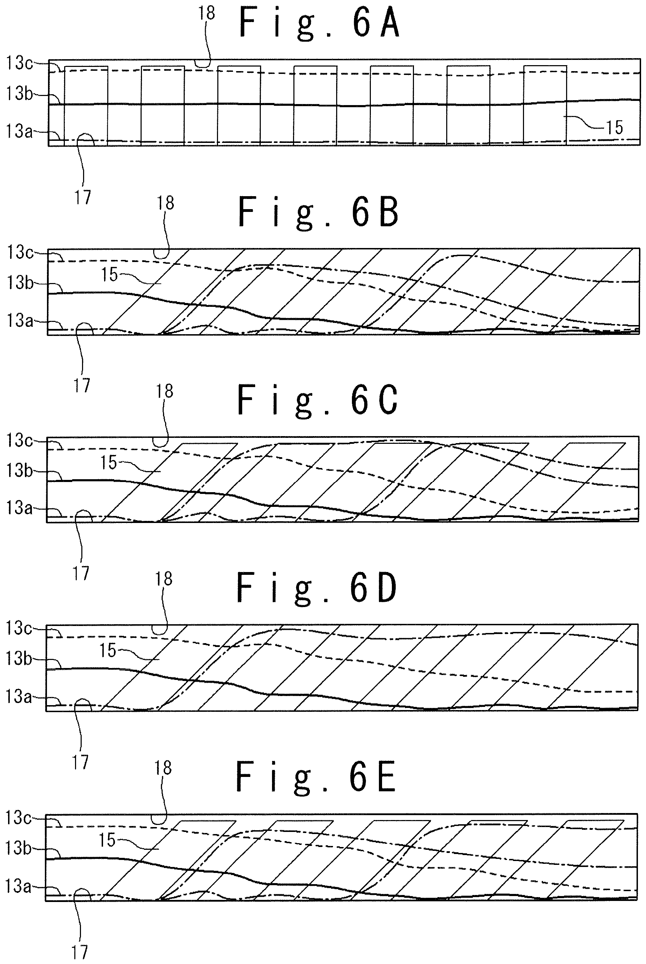

FIG. 6A to FIG. 6E are diagrams showing the simulation results of the flow of the cooling air 13. In FIG. 6A, the simulation result is shown when the first surface 17 is a flat plane, a rate of the clearance b is about 10%, and each pin fin 15 extends straightly upwardly. In FIG. 6B, the simulation result is shown when an unevenness degree of the first surface 17 is 2, the clearance b is zero and an angle (hereinafter, to be referred to as an inclination angle) between each pin fin 15 and the first surface 17 is 45°. In FIG. 6C, the simulation result is shown when the unevenness degree of the first surface 17 is 2, a rate of the clearance b is about 10% and the inclination angle is 45°. In FIG. 6D, the simulation result is shown when the unevenness degree of the first surface 17 is 1, a rate of the clearance b is zero and the inclination angle is 45°. In FIG. 6E, the simulation result is shown when the unevenness degree of the first surface 17 is 1, a rate of the clearance b is about 10% and the inclination angle is 45°.

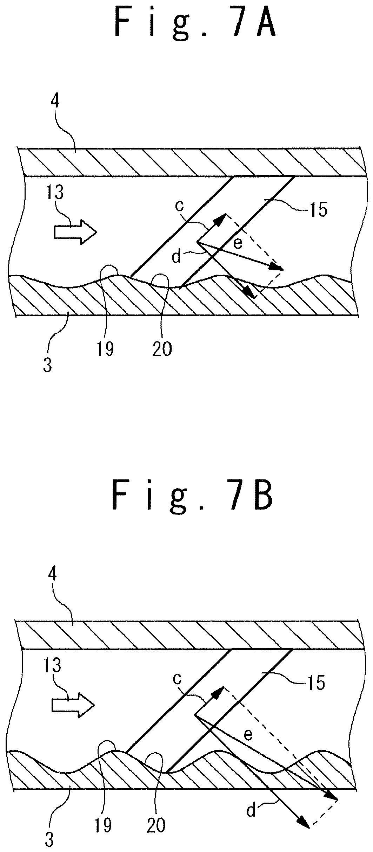

It should be noted that, the unevenness degree is a parameter showing the inclination of the slope which extends from the vertex of the convex portion to the downstream side when the first surface 17 is a wave type. FIG. 7A is a schematically showing the cooling structure when the unevenness degree is 1. In FIG. 7A, a vector c along the direction in which each pin fin 15 extends is defined and a vector d along a direction orthogonal to the direction of the vector c is defined. The length of the vector c is 1 and the length of the vector d is 2. A synthetic vector of the vector c and the vector d is defined as a vector e. The slope 20 which extends from the vertex 19 to the downstream side in the first surface 17 is formed to be parallel to the vector e. On the other hand, FIG. 7B is a schematically showing the cooling structure when the unevenness degree is 2. Like FIG. 7A, in FIG. 7B, the vector c along the direction in which each pin fin 15 extends is defined, and the vector d along the direction orthogonal to the direction c is defined. The length of the vector c is 1 and the length of the vector d is 4. A synthetic vector of the vector c and the vector d is defined as a vector e. The slope 20 which extends from the vertex 19 to the downstream side in the first surface 17 is formed to be parallel to the vector e.

Again, referring to FIG. 6A to FIG. 6E, there are shown a flow of the cooling air 13a introduced in the neighborhood of the cooling panel 3, a flow of the cooling air 13b introduced in the middle portion between the cooling panel 3 and the shell 4, and a flow of the cooling air 13c introduced in the neighborhood of the shell 4. As shown in FIG. 6A, when the first surface 17 is a flat plane, a rate of the clearance b is about 10%, and each pin fin 15 extends straightly upwardly, the introduced cooling air 13a continues to flow through the neighborhood of the cooling panel 3. The cooling air 13b continues to flow through a middle portion between the shell 4 and the cooling panel 3. The cooling air 13c continues to flow through the clearance b portion (the neighborhood of the shell 4). Therefore, a heat exchange is carried out between the cooling panel 3 and the cooling air 13a, but it is difficult for the heat exchange to be carried out between the cooling air 13b and the cooling air 13c and the cooling panel 3.

On the other hand, as shown in FIG. 6B, when each pin fin 15 is inclined, the cooling air 13b and the cooling air 13c are turned toward the cooling panel 3 by each pin fin 15. As a result, the mixing of the cooling airs 13a to 13 c is promoted and a heat exchange between the cooling panel 3 and the cooling air 13 is promoted.

Also, in an example shown in FIG. 6C, although the clearance b is provided, the mixing of the cooling air 13 is promoted, like the example shown in FIG. 6B. That is, it could be understood that the heat exchange is promoted because each pin fin 15 is inclined, even if the clearance b is provided. Also, even in examples shown in FIG. 6D and FIG. 6E, the same tendency as the examples shown in FIG. 6B and FIG. 6C is confirmed. That is, it could be understood that even if the clearance b is provided, the heat exchange can be promoted even if the unevenness degree is changed because each pin fin 15 is inclined.

As described above, according to the present example, a maximum allowable clearance is set such that the heat transfer rate between the cooling air and the cooling panel 3 become larger than the heat transfer rate when each pin fin 15 extends straightly upwardly. Because the maximum allowable value of the clearance b can be set to a large value, the manufacture precision required in manufacturing can be restrained. In addition, as shown in FIG. 5A, although the maximum allowable value of the clearance b is set to the large value, the reduction of the heat transfer rate is small and the cooling efficiency reduces scarcely. That is, the manufacturing cost can be restrained while maintaining good cooling efficiency.

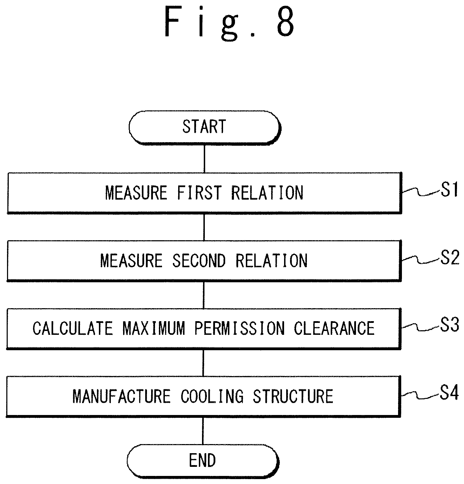

Next, a manufacturing method of the cooling structure according to the present embodiment will be described. FIG. 8 is a flow chart showing the manufacturing method of the cooling structure according to the present embodiment.

### Step S1: Measurement of first relation

First, the first relation a (reference to FIG. 5A) is measured. That is, when each pin fin 15 is inclined along the direction of a flow of the cooling air, the relation of the heat transfer rate between the cooling air and the cooling panel 3 and the clearance b is measured.

For example, the first relation a can be measured by using a naphthalene sublimation method. When using the naphthalene sublimation method, a model of the cooling panel 3 having the inclined pin fins 15 is first formed of naphthalene. The model does not have to be the model of a full scale and may be an expansion model. For example, the model can be attained by mold shaping. For example, the surface shape of the formed model is measured by a laser displacement measuring instrument and so on. Next, the periphery of the formed model is covered with a covering member such that the passages 16 (reference to FIG. 4) are formed. At this time, the model is covered such that the clearance b is formed. After that, the cooling air is introduced into the formed passage 16 for a predetermined time. After a predetermined time elapses, the surface shape of the model is measured again. Then, a change amount of the surface shape before and after the introduction of the cooling air is determined and the heat transfer rate is determined based on the change amount. By repeating the above processing while changing size of the clearance b, the first relation a can be measured.

### Step S2: Measurement of second relation

Next, the second relation a (reference to FIG. 5A) is measured. That is, in case that each pin fin 15 extends straightly upwardly from the first surface, the relation of the clearance b and the heat transfer rate is measured. The second relation a can be measured by the same method as the first relation.

### Step S3: Calculation of maximum allowable clearance

Next, a maximum value of the clearance b is determined as a maximum allowable clearance based on the first relation a and the second relation b such that the heat transfer rate when each pin fin 15 is inclined is larger than the heat transfer rate in the maximum allowable clearance when each pin fin 15 extends straightly upwardly. That is, when the relation as shown in FIG. 5A is obtained, a value which is larger than the value A is determined as the maximum allowable clearance.

FIG. 5B is a diagram showing an example of a method of determining the maximum allowable clearance. It is supposed that the minimum allowable value of the heat transfer rate is previously set, as shown in FIG. 5B. It is supposed that a value of the clearance corresponding to the minimum allowable value of heat transfer rate in the first relation a is B. In this case, the value B is determined as the maximum allowable clearance.

### Step S4: Manufacturing cooling structure

After that, the cooling panel 3 is manufactured such that the clearance b actually formed is equal to or lower than the maximum allowable clearance determined at step S3, and is attached to the shell 4. For example, when the maximum allowable clearance determined at step S3 is 10%, the cooling structure is manufactured such that the actual clearance b is equal to or less than 10%. After that, the cooling structure is attached to the shell, it is confirmed whether or not the clearance actually formed becomes is equal to or lower than the maximum allowable clearance. When the actual clearance b is not equal to or less than 10%, a necessary handling is carried out, e.g. the cooling panel 3 is handled as the defective.

As described above, the cooling structure is obtained through the steps S1 to S4 according to the present embodiment. According to the cooling structure manufactured according to the present embodiment, the heat transfer rate becomes larger than the minimum allowable value of the heat transfer rate when each pin fin 15 extends straightly upwardly. A maximum value of the clearance b, i.e. the maximum allowable clearance is set. Therefore, when manufacturing the cooling structure, the high manufacture precision is never required and a manufacturing cost can be restrained. Also, even if the clearance b to some extent is provided, the high heat transfer rate can be maintained and the cooling efficiency can be maintained.

### [Second Example]

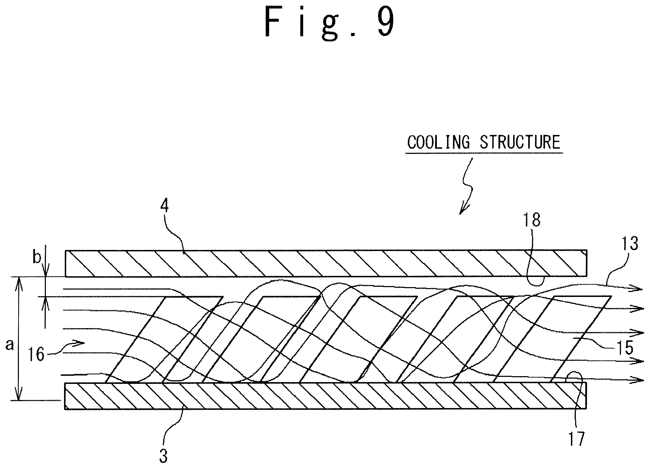

Next, a second example serving to explain features of the invention will be described. FIG. 9 is a diagram schematically showing the cooling structure according to the present example. In the present example, the configuration of the first surface 17 of the cooling panel 3 is changed from the first example. Because the same configuration as in the first example can be adopted for the other points, the detailed description is omitted.

As shown in FIG. 9, in the present example, the first surface 17 is a flat plane. When each pin fin 15 is inclined along a direction of a flow of the cooling air 13, the cooling air 13 is turned to the cooling panel 3 due to each pin fin 15 and collides diagonally to the first surface 17. Therefore, it would be considered that the cooling efficiency becomes lower, comparing with the first example. However, in the present example, because the maximum allowable value of the clearance b is appropriately set, it is possible to restrain the manufacturing cost while maintaining the cooling efficiency.

## Claims

1. A method of manufacturing a cooling structure which comprises:
a first member (3) as a cooling object having a first surface (17); and
a second member (4) arranged above said first surface (17) to have a second surface (18) to oppose to said first surface (17) such that a passage (16) is formed between said first surface (17) and said second surface (18) for a cooling medium (13) to flow,
wherein said first member (3) comprises a plurality of prominences (15) which extend upwardly from said first surface (17), and
wherein each of said plurality of prominences (15) extends to be inclined along a direction in which said cooling medium (13) is to flow, and
wherein a clearance (b) is formed between a tip of each of said plurality of prominences (15) and said second surface (18),
wherein said method comprises:
measuring a first relation of a clearance (b) formed between a tip of each of a plurality of prominences (15) of a first member (3) and a second surface of a second member (4) and a heat transfer rate between a cooling medium (13) and the first member (3), when said prominences (15) are inclined along a direction in which the cooling medium (13) flows;
measuring a second relation of a clearance (b) formed between a tip of each of a plurality of prominences (15) of a first member (3) and a second surface of a second member (4) and a heat transfer rate between a cooling medium (13) and the first member (3) when said prominences (15) extend upwardly from a first surface (17) of the first member (3);
determining as a maximum allowable clearance, a clearance (b) based on said first relation and said second relation such that the heat transfer rate when the prominences (15) are inclined becomes larger than the heat transfer rate when the prominences (15) extend upwardly in a vertical direction; and
manufacturing the cooling structure by providing said second member (4) above said first surface (17) such that the actually formed clearance (b) between the tip of each of said plurality of prominences (15) and said second surface (18) is equal to or less than said maximum allowable clearance.

2. The method of manufacturing a cooling structure according to claim 1, wherein a distance between said first surface (17) and said second surface (18) is a first distance (a), and a rate of said maximum allowable clearance to said first distance (a) is equal to or more than 5%.

3. The method of manufacturing a cooling structure according to claim 1 or 2, wherein said first surface (17) is formed to have a wave-like shape when a section of said first member (3) is viewed along a direction of the flow of said cooling medium (13).

4. The method of manufacturing a cooling structure according to any of claims 1 to 3, wherein an angle between said each prominence (15) and said first surface (17) is in a range equal to or more than 30° and equal to or less than 60°.

5. The method of manufacturing a cooling structure according to any of claims 1 to 4, wherein the first member (3) is a cooling panel of a wall section of a combustor liner (5), the second member (4) is a shell of the combustor liner (5), the prominences (15) are pin fins, and the cooling medium (13) is cooling air.

6. The method of manufacturing a cooling structure according to any of claims 1 to 5, wherein said first and second relations are measured by using a naphthalene sublimation method in which a model of said first member (3) as the cooling object having said inclined or straight upwardly extending prominences (15) is first formed of naphthalene, the surface shape of the model is measured using a laser displacement measuring instrument, the periphery of the model is covered with a covering member such that the passage and the clearance are formed, cooling air is introduced into the passage, and, after a predetermined time elapses, the surface shape of the model is measured again and the heat transfer rate is determined based on a change amount of the surface shape before and after the introduction of the cooling air, wherein the processing is repeated for different sizes of the clearance.

## Patentansprüche

1. Ein Verfahren zum Herstellen einer Kühlstruktur, die umfasst:
ein erstes Element (3) als ein Kühlobjekt mit einer ersten Oberfläche (17), und
ein zweites Element (4), das über der ersten Oberfläche (17) angeordnet ist, um eine zweite Oberfläche (18) gegenüber der ersten Oberfläche (17) so zu haben, dass ein Durchgang (16) zwischen der ersten Oberfläche (17) und der zweiten Oberfläche (18) zum Strömen eines Kühlmediums (13) gebildet ist,
wobei das erste Element (3) eine Vielzahl von Vorsprüngen (15) aufweist, die sich von der ersten Oberfläche (7) nach oben erstrecken, und
wobei jeder der Vielzahl von Vorsprüngen (15) sich so erstreckt, dass er entlang einer Richtung geneigt ist, in der das Kühlmedium (13) strömen soll, und
wobei ein Zwischenraum (b) zwischen einem Außenende von jedem der Vielzahl von Vorsprüngen (15) und der zweiten Oberfläche (18) ausgebildet ist,
wobei das Verfahren aufweist:
Messen einer ersten Beziehung eines Zwischenraums (b), der zwischen einem Außenende von jedem von einer Vielzahl von Vorsprüngen (15) eines ersten Elements und einer zweiten Oberfläche eines zweiten Elements (4) gebildet ist, und einer Wärmeübertragungsrate zwischen einem Kühlmedium (13) und dem ersten Element (3), wenn die Vorsprünge (15) entlang einer Richtung geneigt sind, in der das Kühlmedium (13) strömt,
Messen einer zweiten Beziehung eines Zwischenraums (b), der zwischen einem Außenende von jedem von einer Vielzahl von Vorsprüngen (15) eines ersten Elements (3) und einer zweiten Oberfläche eines zweiten Elements (4) gebildet ist, und einer Wärmeübertragungsrate zwischen einem Kühlmedium (13) und dem ersten Element (13), wenn die Vorsprünge (15) sich von einer ersten Oberfläche (17) des ersten Elements (3) nach oben erstrecken,
Bestimmen eines Zwischenraums (b) basierend auf der ersten Beziehung und der zweiten Beziehung als einen maximal zulässigen Zwischenraum, sodass die Wärmeübertragungsrate, wenn die Vorsprünge (15) geneigt sind, größer wird als die Wärmeübertragungsrate, wenn die Vorsprünge (15) sich nach oben in einer vertikalen Richtung erstrecken, und
Herstellen der Kühlstruktur durch Vorsehen des zweiten Elements (4) über der ersten Oberfläche (17) so, dass der tatsächlich gebildete Zwischenraum (b) zwischen dem Außenende von jedem der Vielzahl von Vorsprüngen (15) und der zweiten Oberfläche (18) gleich oder geringer ist als der maximal zulässige Zwischenraum.

2. Das Verfahren zum Herstellen einer Kühlstruktur gemäß Anspruch 1, wobei eine Distanz zwischen der ersten Oberfläche (17) und der zweiten Oberfläche (18) eine erste Distanz (a) ist, und eine Rate des maximal zulässigen Zwischenraums zu der ersten Distanz (a) gleich oder mehr als 5% ist.

3. Das Verfahren zum Herstellen einer Kühlstruktur gemäß Anspruch 1 oder 2, wobei die erste Oberfläche (17) ausgebildet ist, um eine wellenartige Form zu haben, wenn ein Schnitt des ersten Elements (3) entlang einer Richtung der Strömung des Kühlmediums (13) betrachtet wird.

4. Das Verfahren zum Herstellen einer Kühlstruktur gemäß einem der Ansprüche 1 bis 3, wobei ein Winkel zwischen dem jeden Vorsprung (15) und der ersten Oberfläche (17) in einem Bereich gleich oder mehr als 30° und gleich oder weniger als 60° ist.

5. Das Verfahren zum Herstellen einer Kühlstruktur gemäß einem der Ansprüche 1 bis 4, wobei das erste Element (3) eine Kühlplatte eines Wandabschnitts einer Brennkammerauskleidung (5) ist, das zweite Element (4) ein Mantel der Brennkammerauskleidung (5) ist, die Vorsprünge (15) Stiftrippen sind, und das Kühlmedium (13) Kühlluft ist.

6. Das Verfahren zum Herstellen einer Kühlstruktur gemäß einem der Ansprüche 1 bis 5, wobei die ersten und zweiten Beziehungen gemessen werden durch Verwenden eines Naphthalen-Sublimationsverfahrens, bei dem ein Modell des ersten Elements (3) als das Kühlobjekt mit den geneigten oder sich gerade aufwärts erstreckenden Vorsprüngen (15) zuerst aus Naphthalen geformt wird, die Oberflächenform des Modells unter Verwendung eines Laser-Versatz-Messinstruments gemessen wird, die Peripherie des Modells mit einem Abdeckelement so abgedeckt wird, dass der Durchgang und der Zwischenraum gebildet werden, Kühlluft in den Durchgang eingebracht wird, und, nachdem eine vorbestimmte Zeit verstrichen ist, die Oberflächenform des Modells erneut gemessen wird und die Wärmeübertragungsrate basierend auf einer Änderungsgröße der Oberflächenform vor und nach dem Einbringen der Kühlluft bestimmt wird, wobei die Bearbeitung für unterschiedliche Größen des Zwischenraums wiederholt wird.

## Revendications

1. Procédé de fabrication d'une structure de refroidissement, qui comprend :
un premier élément (3), comme objet refroidissant, ayant une première surface (17) et
un deuxième élément (4), disposé au-dessus de la première surface (17) pour avoir une deuxième surface (18) à opposer à la première surface (17), de manière à former un passage entre la première surface (17) et la deuxième surface (18) d'écoulement d'un fluide (13) réfrigérant,
dans lequel le premier élément (3) comprend une pluralité de proéminences (15), qui s'étendent vers le haut à partir de la première surface (17) et
dans lequel chacune de la pluralité de proéminences (15) est inclinée suivant une direction dans laquelle le fluide (13) réfrigérant s'écoule et
dans lequel un jeu (b) est formé entre une pointe de chacune de la pluralité de proéminences (15) et la deuxième surface (18),
dans lequel le procédé comprend :
mesurer une première relation d'un jeu (b) formé entre une pointe de chacune de la pluralité de proéminences (15) du premier élément (3) et une deuxième surface d'un deuxième élément (4) et une vitesse de transfert de la chaleur entre un fluide (13) réfrigérant et le premier élément (3), lorsque les proéminences (15) sont inclinées dans une direction dans laquelle s'écoule fluide (13) réfrigérant ;
mesurer une deuxième relation d'un jeu (b) formé entre une pointe de chacune de la pluralité de proéminences (15) d'un premier élément (3) et une deuxième surface d'un deuxième élément (4) et une vitesse de transfert de la chaleur entre un fluide (13) réfrigérant et le premier élément (3), lorsque les proéminences (15) s'étendent vers le haut à partir d'une première surface (17) du premier élément (3) ;
déterminer, comme jeu maximum admissible, un jeu (b) sur la base de la première relation et de la deuxième relation, de manière à ce que la vitesse de transfert de la chaleur, lorsque les proéminences (15) sont inclinées, devienne plus grande que la vitesse de transfert de la chaleur, lorsque les proéminences (15) s'étendent vers le haut dans une direction verticale, et
fabriquer la structure de refroidissement en prévoyant le deuxième élément (4) au-dessus de la première surface (17), de manière à ce que le jeu (b) formé réellement, entre la pointe de chacune de la pluralité de proéminences (15) et la deuxième surface (18), soit inférieur ou égal au jeu maximum admissible.

2. Procédé de fabrication d'une structure de refroidissement suivant la revendication 1, dans lequel une distance entre la première surface (17) et la deuxième surface (18) est une première distance (a), et un rapport du jeu maximum admissible à la première distance (a)est supérieur ou égal à 5%.

3. Procédé de fabrication d'une structure de refroidissement suivant la revendication 1 ou 2, dans lequel on forme la première surface (17), de manière à avoir une forme ondulée, lorsqu'une partie du premier élément (3) est vue suivant un sens de l'écoulement du fluide (13) réfrigérant.

4. Procédé suivant l'une quelconque des revendications 1 à 3, dans lequel un angle entre chaque proéminence (15) et la première surface (17) est dans une plage supérieure ou égale à 30° et inférieure ou égale à 60°.

5. Procédé suivant l'une quelconque des revendications 1 à 4, dans lequel le premier élément (3) est un panneau réfrigérant d'une partie de paroi d'un revêtement (5) de chambre de combustion, le deuxième élément (4) est une coquille du revêtement (5) de chambre de combustion, les proéminences (15) sont des aiguilles et le fluide (13) réfrigérant est de l'air de refroidissement.

6. Procédé suivant l'une quelconque des revendications 1 à 5, dans lequel les premières et deuxièmes relations sont mesurées en utilisant un procédé de sublimation du naphtalène, dans lequel un modèle du premier élément (3), comme objet refroidissant, ayant les proéminences (15) s'étendant de manière inclinée ou droite vers le haut et formées d'abord de naphtalène, la forme de surface du modèle étant mesurée en utilisant un instrument de mesure de déplacement au laser, la périphérie du modèle étant recouverte d'un élément de recouvrement, de manière à former le passage et le jeu, de l'air de refroidissement est introduit dans le passage et, après expiration d'une durée déterminée à l'avance, la forme de la surface du modèle est mesurée à nouveau et la vitesse de transfert de chaleur est déterminée sur la base d'un changement de la forme de la surface avant et après l'introduction d'air de refroidissement, le traitement étant répété pour des dimensions différentes du jeu.
